# EUROPEAN PATENT APPLICATION

(11) **EP 2 386 750 A1**
(43) Date of publication of application: **16.11.2011**
(21) Application number: 10162642.2
(22) Date of filing: 12.05.2010
(51) Int. Cl.: F03D 1/06, F03D 11/00

(54) **De-icing and/or anti-icing of a wind turbine component by vibrating a piezoelectric material**

(71) Applicant: SIEMENS AKTIENGESELLSCHAFT, 80333 München (DE)
(72) Inventor: Libergren, Peter, 8464, Herskind (DK)

(57) **Abstract**

It is described a system for de-icing and/or for avoiding an icing of a component (114, 214, 414) of a wind turbine (100). The system (260) comprises a vibrator (280, 380), which comprises a piezoelectric material (384) and which is adapted to be mounted to at least to a portion of the component (114, 214, 414), and an electric generator (270), which is adapted to supply an electric signal to the vibrator (280, 380), wherein the electric signal causes the vibrator (280, 380) to vibrate and to transfer vibrational energy to at least a surface portion of the component (114, 214, 414). It is further described a corresponding method for de-icing and/or for avoiding an icing of a component (114, 214, 414) of a wind turbine (100).

## Description

### Field of invention

The present invention relates to the technical field of wind turbines. In particular, the present invention relates to a system and to a method for de-icing and/or for preventing an icing of a component of a wind turbine.

### Art Background

Icing on any exposed part of a wind turbine can occur and cause decreased performance of the wind turbine. Furthermore e.g. when ice is accumulated on one or more of the rotor blades of a wind turbine, excess vibration problems from uneven blade icing may occur. This in turn may generate excessive mechanical loads on the wind turbine components leading eventually to wind turbine shut-down or to wind turbine faults.

Problems related to icing can be prevented by at least one of two different measures: A first measure (a) is de-icing, which allows a component to ice up before the ice is removed. A second measure (b) is anti-icing which implies prohibiting ice from building up on the component.

Several attempts to come up with equipment and methods for de-icing and anti-icing of wind turbine components have been developed so far:

US 7,217,091 discloses a method for deicing a turbine rotor blade having a blade root, a blade tip, and a leading edge, wherein the turbine rotor blade is coupled to a hub of a turbine. The method includes (a) circulating heated air through an outflow channel from the blade root towards the blade tip, (b) re-circulating the heated air via a return channel from the blade tip to the blade root, whereupon the re-circulated heated air becomes returned air, and (c) reheating the returned air for further circulation.

WO 98/01340 discloses a method for anti-icing or for avoiding an icing of windmill wings of composite materials. Use is made of microwave energy for heating the composite material itself. The microwave energy is preferably being supplied from the interior of the windmill wings by means of fixedly mounted microwave generators, which are activated in response to a detection of occurrence of potential climatic conditions for icing.

WO 2009/043352 A2 discloses a method for de-icing a blade of a wind turbine, after the wind turbine has been idle for a period of time. The method comprises the steps of creating a controlled acceleration condition of the blade, and subsequently creating a controlled deceleration condition of the blade, whereby ice is shaken of the blade.

US 6,890,152 B1 discloses a method for de-icing a wind turbine blade. The method includes detecting an icy condition on a wind turbine blade and causing at least a portion of the wind turbine blade to vibrate such that ice, which has been built up on the wind turbine blade, breaks off. The vibration may be generated by means of vibrators such as commercially available electromagnetic vibrators. For example, the vibrators may be similar to those used in many material conveyor processes to shake the sides of bins and other large containers to free up the product being conveyed. In a particular embodiment, the vibrators may be sonic horn that, when being activated, are capable of generating low frequency acoustic wave that causes the blade to vibrate. The sonic horns may be located within the blades. Each blade may contain one or more sonic horns which may be located at or near the leading edge of the blade. The sonic horn(s) may generate an acoustic wave having a predetermined range of frequencies, such as, for example, ranging approximately from 5 to 500 Hz.

There may be a need for providing an effective de-icing procedure and/or for an effective anti-icing procedure which can be applied to a component of a wind turbine.

### Summary of the Invention

This need may be met by the subject matter according to the independent claims. Advantageous embodiments of the present invention are described by the dependent claims.

According to a first aspect of the invention there is provided a system for de-icing and/or for avoiding an icing of a component of a wind turbine. The provided system comprises (a) a vibrator, which comprises a piezoelectric material and which is adapted to be mounted to at least to a portion of the component, and (b) an electric generator, which is adapted to supply an electric signal to the vibrator, wherein the electric signal causes the vibrator to vibrate and to transfer vibrational energy to at least a surface portion of the component.

The described system is based on the idea that a piezoelectric induced vibration of a surface portion of the component will ensure, that water respectively ice drops cannot "adhere" to the surface of the component. Thereby, an effective anti-icing can be realized. For de-icing purposes the vibration will ensure that the microscopic adhesions of the ice crystals to the surface of the wind turbine component will be broken which in turn will detach the ice from the wind turbine component.

In this document the term piezoelectric and/or piezoelectricity may particularly denote the ability of some materials to generate an electrical field or electric potential in response to an applied mechanical stress. The piezoelectric effect is reversible in that materials exhibiting the direct piezoelectric effect i.e. the production of an electrical potential when stress is applied, also exhibit the reverse piezoelectric effect which is the production of stress (strain) when an electric field is applied.

The piezoelectric vibrator may be embedded within the component, preferably close to the surface of the component. Alternatively, the piezoelectric vibrator may be attached onto the surface of the component. In this case a top surface of the vibrator represents the surface of the wind turbine component.

According to an embodiment of the invention the vibrator comprises a piezoelectric film, which is sandwiched between two conductive layers, which are connected to the electric generator. The piezoelectric film may be in particular a piezoelectric polymer material. For piezoelectric polymers such as Polyvinylidene Fluoride (PVDF) and others, intertwined long-chain molecules attract and repel each other when an electric field is applied resulting in the production of strain.

One or more piezoelectric films may be placed substantially on the surface of the wind turbine component. The films are electrically connected to some alternating current (AC) source. When AC is applied to one or more of the films, the polymer molecules attract and repel each other and thereby vibrate with a frequency equal to the applied AC frequency.

The use of a piezoelectric film may provide various advantages compared to known de-icing and/or anti-icing procedures for wind turbine components: (A) The described de-icing and/or anti-icing system can react very fast as the desired vibration (attraction and repel of the polymer molecules) occur immediately when the electric AC is applied to the films thereby breaking the microscopic attachments between ice and the turbine component. (B) The described system may be very easy to control i.e. either the piezoelectric films vibrate or they don't. This is in substantial contrast to e.g. a heating-up of a wind turbine component from the inside of the component whereby it is necessary to reach a certain temperature at the surface before an ice smelting method may work. (C) The described de-icing and/or anti-icing system may allow for a cost effective de-icing and/or ant-icing procedure e.g. compared to methods where thermal energy has to be put into a system in order to heat up the whole or parts of the wind turbine component. A further advantage which may be provided by the described system consists of the possibility, that the de-icing and/or the anti-icing can be easily controlled from remote. This may be in particular advantageous if the wind turbine is situated at a location (e.g. within the sea), which is not or which is not easily accessible. Normally those wind turbines, where icing may become a problem, are located in very remote areas. Therefore, an easy and effective operability by remote control is a very important feature.

According to a further embodiment of the invention the vibrator is coated with a protective layer. This may provide the advantage that the durability of the vibrator against environmental influences can be significantly increased and a long lifetime and a reliable operation of the described system can be ensured.

The protective layer may be any material, which ensures that the mechanical influence by the piezoelectric film can be transported through the protective layer to the surface of the component and in particular to the connection surface between the component and the attached ice or the location where the ice may attach.

The protective layer may comprise some elastic or semi-elastic material such as for instance silicone and/or rubber. Further, the protective layer may also be a conductive metal foil. Also a conventional coating or paint could be used for realizing the protective layer.

According to a further embodiment of the invention the vibrator is integrated within a surface layer of the component. Also this embodiment may provide the advantage that the durability of the vibrator against environmental influences can be significantly increased and a long lifetime and a reliable operation of the described system can be ensured.

Again, it may be important that the surface layer is of a material and comprises properties that ensure that the mechanical influence by the piezoelectric film, i.e. the vibrational energy, can be transported to the surface of the component and especially to the connection surface between the component and the attached ice or where the ice may attach.

In particular if the component is made from a reinforced material, which comprises several layers, the piezoelectric film can be easily integrated within one layer of reinforced material. When producing such a component one only has to ensure that also appropriate electric cables are integrated for applying the electrical signal to the piezoelectric film.

According to a further embodiment of the invention the vibrator comprises a further piezoelectric film, wherein piezoelectric polymer fibers of the piezoelectric film are oriented in a first direction and further piezoelectric polymer fibers of the further piezoelectric film are oriented in a second direction being different to the first direction. This may mean that the vibrator of the de-icing and/or anti-icing system is build up of more than one film element, wherein the piezoelectric polymer fibers of different film elements extend in different directions e.g. one section where the polymer molecules are oriented substantially in a longitudinal direction of the component (e.g. a rotor blade) and another section where the polymer molecules are oriented substantially in the transversal direction of the component (e.g. the rotor blade). Thereby, in response to the application of an AC electric signal each section contracts in different directions. This may improve the capability of the vibrator to discard ice which has been attached to the surface of the component.

According to a further embodiment of the invention the electric generator is adapted for generating electric signals having variable frequencies and/or variable amplitudes. This may provide the advantage that depending on the structure of the ice, which is supposed to be removed, an appropriate vibrating frequency and/or an appropriate amplitude can be chosen. Thereby, the amplitude may be defined by the voltage of the electric signal.

The frequency range, which is covered by the variable frequency waveform generator, may extend e.g. from 0.1 Hz up to some kHz, in particular from 1 Hz up to 10 kHz and more particular from 20 Hz up to 2 kHz.

In case the vibrator comprises a piezoelectric film as described above, the film thickness may be adapted at least approximately to the intended frequency. In other words, the frequency and/or the thickness may be chosen such that the piezoelectric film is driven at least in the vicinity of its resonance frequency. This may provide the advantage that comparatively large vibration amplitudes can be realized. Preferably, the resonance frequency may be associated with a thickness mode vibration.

Generally speaking, the described electric generator may allow for comprehensive control possibilities in particular if both the applied frequency and the applied voltage can be controlled in numerous combinations.

Specifically, for various embodiments of the described system, the frequency of the AC electric signal may be monotonous or may be alternating such as sweeping through a defined frequency spectrum. For other embodiments the amplitude of the AC electric signal may be monotonous or may be alternating such as sweeping through a defined amplitude range. Further, the frequency and/or the amplitude of the AC electric signal may be altered in dependency to one or more environmental parameter such as the temperature, air humidity etc. In other embodiments the frequency and/or the amplitude of the AC electric signal may be altered in dependency to one or more operational parameter such as a vibration in the drive train, rotational speed etc.

According to a further embodiment of the invention the system further comprises a sensor, which is connected to the electric generator and which is adapted to trigger the operation of the electric generator based on a determined environmental and/or operational condition of the wind turbine. This may mean that the described system can initiate itself if the sensor provides an according trigger pulse being indicative for the occurrence of a predefined environmental and/or operational condition of the wind turbine. Thereby, such a condition may be determined by one or by more sensors, which are connected to the electric generator.

The described sensor(s) may be connected directly to the electric generator or indirectly via for instance a control unit to the electric generator. Such a control unit may be used for a detailed analysis of the sensor signal(s). Thereby, it may be possible that not only the actual sensor output signal(s) is(are) taken into account. A sensor signal analysis may also take into account a time dependency of the respective sensor output signal(s).

The at least one sensor may be for instance an ice sensor, which is adapted for detecting the presence of ice on the surface of the wind turbine component. The at least one ice sensor may be located on any structure of the wind turbine.

The at least one sensor may also be for instance a sensor, which is adapted for detecting environmental conditions, which might promote a formation of ice on the wind turbine component sensor. In this respect it is mentioned that when specific environmental conditions are met, the risk of icing occurs. However, these conditions are local conditions. As a wind turbine is stationary, it will be exposed to icing all the time said conditions are present. This is in complete contrast to e.g. an airplane (in the air), which is only exposed to the said local conditions as long as the plane flies within this local area. Changing e.g. the altitude of the airplane will change the environmental conditions and thereby the risk of icing. Therefore an airplane (in the air) can seek to avoid icing, whereas a wind turbine cannot. As a consequence, the described system with at least one environmental sensor may be very effective for performing a de-icing and/or an anti-icing. Thereby, it is possible to activate the vibrator only when it is really necessary. As a consequence, the described system may allow for an energy efficient deicing and/or anti-icing.

According to a further embodiment of the invention the vibrator and the sensor are realized with one and the same device. This may provide the advantage that the described de-icing and/or anti-icing system can be realized with a reduced number of system component parts.

In this respect it may be utilized that a resonance frequency of the vibrator changes when additional mass or inertia is situated on an oscillating portion of the vibrator. Therefore, the above described piezoelectric film also may act as a sensor generating a current dependent on the loads to which the film is exposed. As a consequence, the piezoelectric film may have the function of an ice detector.

According to a further embodiment of the invention the component is a blade of a rotor of the wind turbine. This may provide the advantage that a wind turbine component can be released from ice and/or can be protected from the attachment of ice, which component strongly determines the efficiency of a wind turbine power generation.

According to a further embodiment of the invention the vibrator covers only a part of the surface of the blade, in particular a leading edge surface of the blade. The locations, where the piezoelectric film is placed, may be preferably locations with the highest risk of icing such as the leading edge of the blades, anemometers and wind direction sensors.

For various embodiments of the invention, the location where the piezoelectric film is placed is altered. However, it is of course preferable if the piezoelectric film is placed at locations with a high risk of icing. Such locations are in particular the leading edge of a blade, an anemometer and/or a wind direction sensor.

According to a further embodiment of the invention the piezoelectric material of the vibrator comprises a layout having the shape of sectioned rectangles. Thereby, the sectioned rectangles may be arranged along the leading edge of the blade.

The sectioned rectangles may cover a portion or alternatively at least substantially the full area of the leading edge of the blade. The piezoelectric films may be electrically activated individually or in common.

According to a further embodiment of the invention the piezoelectric material of the vibrator comprises a layout having the shape of a plurality of stripes. The stripes may be arranged along the leading edge of the blade. Thereby, the stripes may cover a portion or alternatively at least substantially the full area of the leading edge. Also the stripes may be electrically activated individually or in common.

The control of the various piezoelectric film sections may be dependent on an applied AC control strategy. Thereby, different stripes may be electrically connected to one or more piezoelectric film sections in common or separately. The same holds for the above described layout having the shape of sectioned rectangles.

According to a further embodiment of the invention the piezoelectric material of the vibrator comprises a layout having the shape of at least two rows of interconnected stripes. Thereby, at least one of the two rows may form a comb-like structure. In case both rows have a comb-like structure these structures may intervene with respect to each other. The at least two rows may be electrically activated individually or in common.

According to a further aspect of the invention there is provided a method for de-icing and/or for avoiding an icing of a component of a wind turbine. The provided method comprises (a) supplying an electric signal from an electric generator to a vibrator, which comprises a piezoelectric material and which is mounted to at least to a portion of the component, (b) vibrating the vibrator in response to the supplied electric signal, and (c) transferring vibrational energy from the vibrating vibrator to at least a surface portion of the component.

Also the described method is based on the idea that a piezoelectric induced vibration of a surface portion of the component will ensure, that water drops cannot "adhere" to the surface of the component such that an effective anti-icing can be realized. Accordingly, if ice has already been adhered to the component the piezoelectric induced vibration will ensure that microscopic adhesions of ice crystals to the surface of the component blade will be broken which in turn will detach the ice from the component. Thereby, an effective deicing can be realized.

According to an embodiment of the invention the component is a blade of a rotor of the wind turbine and supplying the electric signal from the electric generator to the vibrator is controlled as a function of the actual rotational angle of the wind turbine rotor. This may provide the advantage that one can control the operation of the vibrator in such a manner that the probability, that ice, which is falling off from a first blade, cannot hit a second blade, which at the moment of the ice brake off, is located below the first blade.

Specifically, it may be possible to activate the vibrator only within a time period, when the respective blade is positioned at least approximately below the rotational axis, such that ice, which falls off from a large height, can be avoided or the probability of ice falling down from a large height can be reduced at least significantly.

In this respect it is mentioned that due to (a) the dimensions of modern wind turbines components, (b) the height of the turbine and (c) the speed with which the rotor rotate, it may become extremely dangerous if blocks of ice are loosen from the turbine components and maybe sling away by e.g. a rotor blade. Therefore, a rotational angle depending control of the operation of the vibrator may contribute to increase the safety within a region surrounding the wind turbine.

It has to be noted that embodiments of the invention have been described with reference to different subject matters. In particular, some embodiments have been described with reference to method type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a wind turbine having a rotor with two blades, wherein each blade is equipped with a piezoelectric vibrator for de-icing and/or for anti-icing the respective blade.
Figure 2 shows in accordance with an embodiment of the invention a de-icing and/or anti-icing system for a blade of a wind turbine.
Figure 3 shows a cross section of a vibrator, which is attached to a wind turbine blade and which is covered by a protective layer.
Figures 4a, 4b and 4c show various locations for attaching piezoelectric vibrator(s) onto a rotor blade of a wind turbine.

### Detailed Description

The illustration in the drawing is schematically. It is noted that in different figures, similar or identical elements are provided with the same reference signs or with reference signs, which are different from the corresponding reference signs only within the first digit.

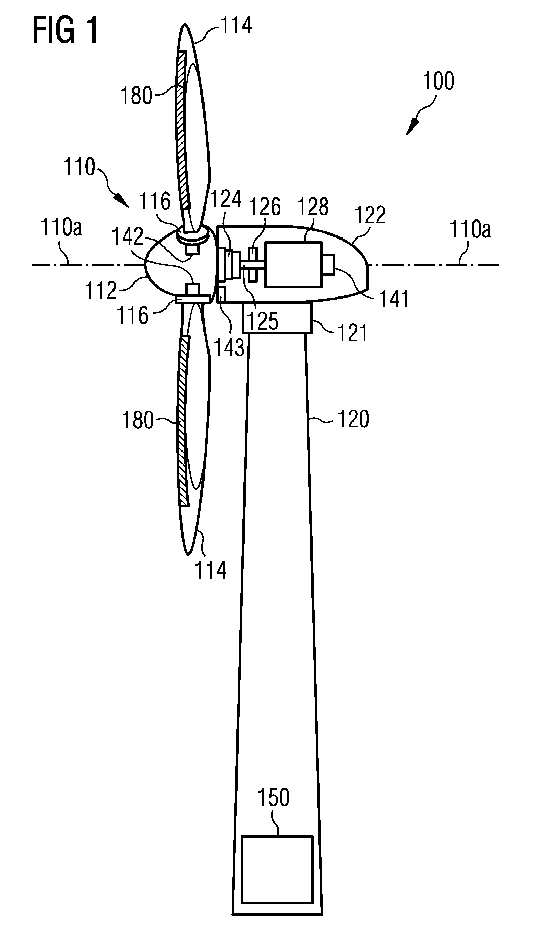

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned with the longitudinal extension of the tower 120. By controlling the yaw angle adjustment device 121 in an appropriate manner it can be made sure, that during a normal operation of the wind turbine 100 the nacelle 122 is always properly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, which is also called a hub, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the respective blade 114. By controlling the blade adjustment device 116 the blade pitch angle of the respective blade 114 can be adjusted in such a manner that at least when the wind is not so strong a maximum wind power can be retrieved from the available wind power.

According to the embodiment described here there is a gear box 124 provided within the nacelle 122. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 or to reduce the rotational speed of the rotor 110 for instance in case of a very strong wind and/or in case of an emergency.

The wind turbine 100 further comprises a control system 150 for operating the wind turbine 100 in a highly efficient manner. Apart from controlling for instance the yaw angle adjustment device 121 the depicted control system 150 is also used for controlling the rotational speed of the rotor 110 by adjusting the blade pitch angle of the rotor blades 114 and by determining an appropriate power generation reference value for the wind turbine 100 in an optimized manner. Further, the control system 150 is used for adjusting the yaw angle of the nacelle 122 respectively of the rotor 110.

For controlling the operation of the wind turbine 100 the control system 150 is connected to a rotational speed sensor 143, which according to the embodiment described here is connected to the gear box 124. The rotational speed sensor 143 feeds a signal to the control system 150, which is indicative for the current rotational speed of the rotor 110.

Although being not essential for realizing the de-icing and/or anti-icing system, the wind turbine 100 shown in Figure 1 comprises (a) a power sensor 141 being connected to the generator 128 and (b) angle sensors 142, which, according to the embodiment described here, are connected to the respective blade adjustment device 116. The power sensor 141 provides information about the current power production of the wind turbine 100. The angle sensors 142 provide information about the current blade pitch angle settings of all rotor blades 114.

Further, in accordance with an embodiment of the invention each blade 114 comprises an attached piezoelectric vibrator 180, which, when being in operation, performs an de-icing and/or an anti-icing of the respective surface portion of the respective rotor blade 114. Further details about the piezoelectric vibrator 180 and the equipment, which is capable of driving the vibrator 180, are given in the following paragraphs.

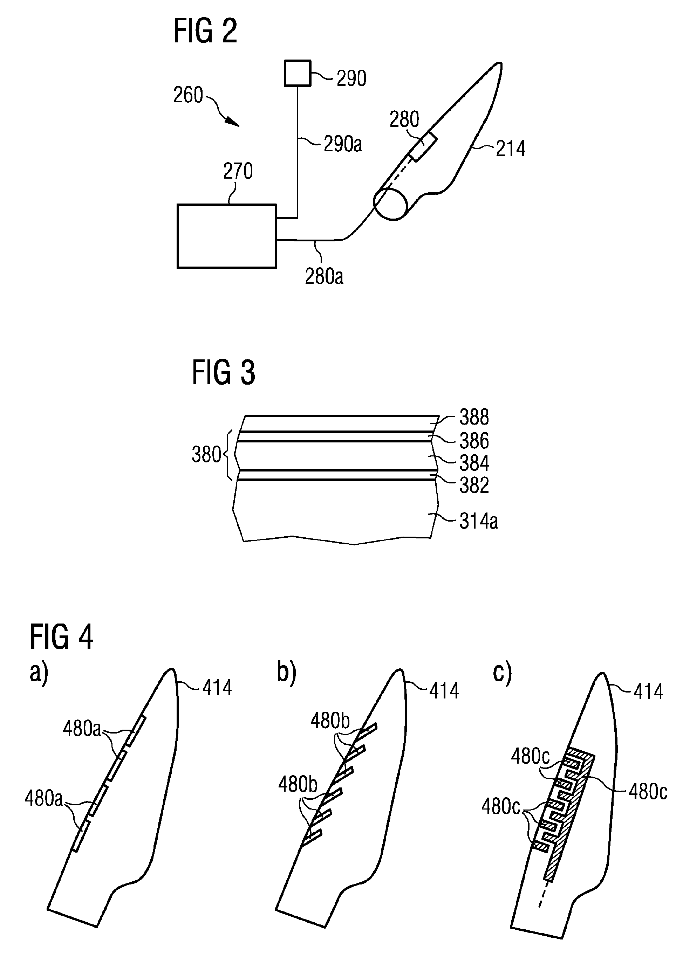

Figure 2 shows in accordance with an embodiment of the invention a de-icing and/or anti-icing system 260 for a blade 214 of a wind turbine. The system 260 comprises a vibrator 280, which is realized by a piezoelectric film being attached on at least a portion of the surface of a wind turbine rotor blade 214. Depending on the specific implementation the piezoelectric film can cover the whole surface or only one or more surface portions of the blade 214. Preferably, the piezoelectric film covers the region of the leading edge of the blade 214.

The vibrator 280 is connected via an electric cable 280a to an electric generator 270. The electric cable 280a, which hereinafter is also denominated a vibrator cable 280a, comprises two wires. A first wire is connected with a first metallic layer (not depicted in Figure 2) being formed at a first surface of the piezoelectric film. The second wire is connected with a second metallic layer (not depicted in Figure 2) being formed at a second surface of the piezoelectric film. By applying an Alternating Current (AC) signal to the two wires the electric generator 270 can cause the piezoelectric film to vibrate. The corresponding vibrational energy is then transferred to the surface of the blade 214. The piezoelectric induced vibration of a surface portion of the blade 214 will ensure, that water drops cannot "adhere". Thereby, an effective ant-icing can be realized. If ice has already been adhered to the blade surface the piezoelectric induced vibration will ensure that microscopic adhesions of ice crystals to the surface of the component blade will be broken which in turn will detach the ice from the component. Thereby, an effective de-icing can be realized.

The de-icing and/or anti-icing system 260 further comprises an ice sensor 290, which is connected to the electric generator 270 via a sensor cable 290a. The ice sensor 290 is adapted to trigger the operation of the electric generator 270 based on a presence of ice on the blade 214. Therefore, the system 260 can initiate itself if the sensor 290 provides an according trigger pulse being indicative for the occurrence of the presence of ice. Of course there may also be employed more than one sensor. Also other sensors than ice sensors may be used for instance in order to determine an environmental condition, which in the absence of vibrations of the vibrator 280 may result in an icing of the blade 214.

Figure 3 shows a cross section of a vibrator 380, which is attached to a reinforced material 314a of a wind turbine blade. The vibrator comprises a piezoelectric material 384, which is sandwiched between a first electrode layer 382 and a second electrode layer 386. The two electrode layers 382 and 386 form a capacitor, which can be driven with an AC signal being supplied from an electric generator. Thereby, a time dependent electric field will be generated within the piezoelectric material 384, which causes the piezoelectric material 384 to vibrate. The second electrode layer 386 is covered by a protective layer 388, which protects the vibrator 380 from damages which might be caused by rough environmental conditions such as heavy rain or hail.

It is mentioned that the protective layer should be made from a material, which allows the vibrations generated by the vibrator 380 to be transferred to the top surface of the protective layer 388. The piezoelectric induced vibrations of the top surface of the protective layer 388 will then break the microscopic attachments between ice and the protective layer 388 such that ice will fall off the rotor blade.

The layout of the piezoelectric film may for various embodiments of the invention be dependent of parameters such as the location of the piezoelectric film, the size of the area covered by the piezoelectric film, the degree of how exposed the area is, etc.

Figures 4a, 4b and 4c show various locations for attaching piezoelectric vibrator(s) onto a rotor blade 414 of a wind turbine.

Figure 4a illustrates a film layout as sectioned rectangles 480a, which are arranged along the leading edge of the blade 414 and which cover substantially the full area of the leading edge. The rectangle films 480a may be electrically activated individually or in common.

Figure 4b illustrates a film layout as stripes 480b along the leading edge of the blade 414. The stripes 480b cover only a part of the area of the leading edge. The stripes may be electrically activated individually or in common.

Figure 4c illustrates a piezoelectric film layout as two rows 480c of interconnected stripes. The rows 480c may be electrically activated individually or in common.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A system for de-icing and/or for avoiding an icing of a component (114, 214, 414) of a wind turbine (100), the system (260) comprising
• a vibrator (280, 380), which comprises a piezoelectric material (384) and which is adapted to be mounted to at least to a portion of the component (114, 214, 414), and
• an electric generator (270), which is adapted to supply an electric signal to the vibrator (280, 380), wherein the electric signal causes the vibrator (280, 380) to vibrate and to transfer vibrational energy to at least a surface portion of the component (114, 214, 414).

2. The system as set forth in the preceding claim, wherein
the vibrator (280, 380) comprises a piezoelectric film (384), which is sandwiched between two conductive layers (382, 386), which are electrically connected to the electric generator (270).

3. The system as set forth in any one of the preceding claim, wherein
the vibrator (280, 380) is coated with a protective layer (388).

4. The system as set forth in any one of the preceding claims, wherein
the vibrator (280, 380) is integrated within a surface layer of the component (114, 214, 414).

5. The system as set forth in any one of the preceding claims, wherein
the vibrator (280, 380) comprises a further piezoelectric film, wherein piezoelectric polymer fibers of the piezoelectric film are oriented in a first direction and further piezoelectric polymer fibers of the further piezoelectric film are oriented in a second direction being different to the first direction.

6. The system as set forth in any one of the preceding claims, wherein
the electric generator (270) is adapted for generating electric signals having variable frequencies and/or variable amplitudes.

7. The system as set forth in any one of the preceding claims, further comprising
a sensor (290), which is connected to the electric generator (270) and which is adapted to trigger the operation of the electric generator (270) based on a determined environmental and/or operational condition of the wind turbine (100).

8. The system as set forth in the preceding claim, wherein
the vibrator (280, 380) and the sensor (290) are realized with one and the same device.

9. The system as set forth in any one of the preceding claims, wherein
the component is a blade (114, 214, 414) of a rotor of the wind turbine (100).

10. The system as set forth in the preceding claim, wherein
the vibrator (280, 380) covers only a part of the surface of the blade (114, 214, 414), in particular a leading edge surface of the blade (114, 214, 414).

11. The system as set forth in any one of the preceding claims 9 to 10, wherein
the piezoelectric material (384) of the vibrator (280, 380) comprises a layout having the shape of sectioned rectangles (480a).

12. The system as set forth in any one of the preceding claims 9 to 10, wherein
the piezoelectric material (384) of the vibrator (280, 380) comprises a layout having the shape of a plurality of stripes (480b).

13. The system as set forth in any one of the preceding claims 9 to 10, wherein
the piezoelectric material (384) of the vibrator (280, 380) comprises a layout having the shape of at least two rows of interconnected stripes (480c).

14. A method for de-icing and/or for avoiding an icing of a component (114, 214, 414) of a wind turbine, the method comprising
• supplying an electric signal from an electric generator (270) to a vibrator (280, 380), which comprises a piezoelectric material (384) and which is mounted to at least to a portion of the component (114, 214, 414),
• vibrating the vibrator (280, 380) in response to the supplied electric signal, and
• transferring vibrational energy from the vibrating vibrator (280, 380) to at least a surface portion of the component (114, 214, 414).

15. The method as set forth in the preceding claim, wherein the component is a blade (114, 214, 414) of a rotor (110) of the wind turbine (100) and wherein supplying the electric signal from the electric generator (270) to the vibrator (280, 380) is controlled as a function of the actual rotational angle of the wind turbine rotor (110).
